# EUROPEAN PATENT SPECIFICATION

(11) **EP 2 894 766 B1**
(45) Date of publication and mention of the grant of the patent: **13.09.2017**
(21) Application number: 14164761.0
(22) Date of filing: 15.04.2014
(51) Int. Cl.: H02K 1/17, H02K 5/15, H02K 5/167, F04D 29/62, F04D 13/06, F04D 29/046, F04D 5/00, H02K 23/04, H02K 5/14

(54) **Fluid pump**
Flüssigkeitspumpe
Pompe à liquide

(30) Priority: 18.04.2013 US 201313865597
(43) Date of publication of application: 15.07.2015
(73) Proprietor: Delphi Technologies, Inc., Troy MI 48007 (US)
(72) Inventor: Herrera, Daniel, Cd Juarez (MX); Fischer, John G., Goodrich, MI 48438 (US); Aslam, Mohammed, Flint, MI 48532 (US); Gonzales, Gustavo, 32330 Cd. Juarez (MX)
(74) Representative: Delphi France SAS

(56) References cited:
- EP-A2- 2 327 870
- FR-A1- 2 726 702
- JP-A- S63 272 994

## Description

### TECHNICAL FIELD

The present invention relates to a fluid pump; more particularly to a fuel pump; and even more particularly to a fuel pump with an electric motor with a motor frame that defines an upper bushing and maintains a coaxial relationship of a lower bushing with the upper bushing.

### BACKGROUND OF THE INVENTION

Fluid pumps, and more particularly fuel pumps for pumping fuel, for example, from a fuel tank of a motor vehicle to an internal combustion engine of the motor vehicle, are known. United States Patent Application Publication No. US 2010/0047090 A1 shows one type of fuel pump which includes an impeller. An inlet plate is disposed adjacent to one face of the impeller and an outlet plate is disposed adjacent to the face of the impeller that is opposite the inlet plate. An electric motor of the fuel pump includes a shaft which is coupled to the impeller. One end of the shaft is supported radially by a lower bushing formed integrally with the outlet plate while the other end of the shaft is supported by an upper bushing formed in a base of the motor. The radial position of the lower bearing is determined by the outside diameter of the outlet plate and the inside diameter of a housing while the radial position of the upper bushing is determined by the outside diameter of the base of the motor and the inside diameter of the housing. Since separate tooling is used to manufacture the housing, the base of the motor and the outlet plate, it may be difficult to maintain a sufficient coaxial relationship between the upper bushing and the lower bushing. EP2327870A2 pertains to an outlet port of a regenerative turbine fuel pump.

EP2327870 discoses:
A fluid pump comprising: an inlet for introducing fluid into said fluid pump; an outlet for discharging fluid from said fluid pump; a motor having a shaft that rotates about an axis, said shaft having an upper end and a lower end; a motor frame;
and a lower bushing for radially supporting said lower end of said shaft. FR2726702A1 relates to electric motors for vehicle ventilation, vehicle's air conditioning or vehicle's heating system.

What is needed is a fuel pump which minimizes or eliminates one or more of the shortcomings as set forth above.

### SUMMARY OF THE INVENTION

Briefly described, the invention is defined in the independent claim. Preferred embodiments are disclosed in the dependent claims.

### BRIEF DESCRIPTION OF DRAWINGS

This invention will be further described with reference to the accompanying drawings in which:
Fig. 1 is an exploded isometric view of a fuel pump in accordance with the present invention;
Fig. 2 is an axial cross-sectional view of the fuel pump in accordance with the present invention;
Fig. 3 is an exploded isometric view of a portion of the fuel pump in accordance with the present invention;
Fig. 4 is an isometric view of a motor frame of the fuel pump in accordance with the present invention; and
Fig. 5 is an isometric view of the motor frame of Fig. 4 now shown in a different orientation.

### DESCRIPTION OF THE PREFERED EMBODIMENT

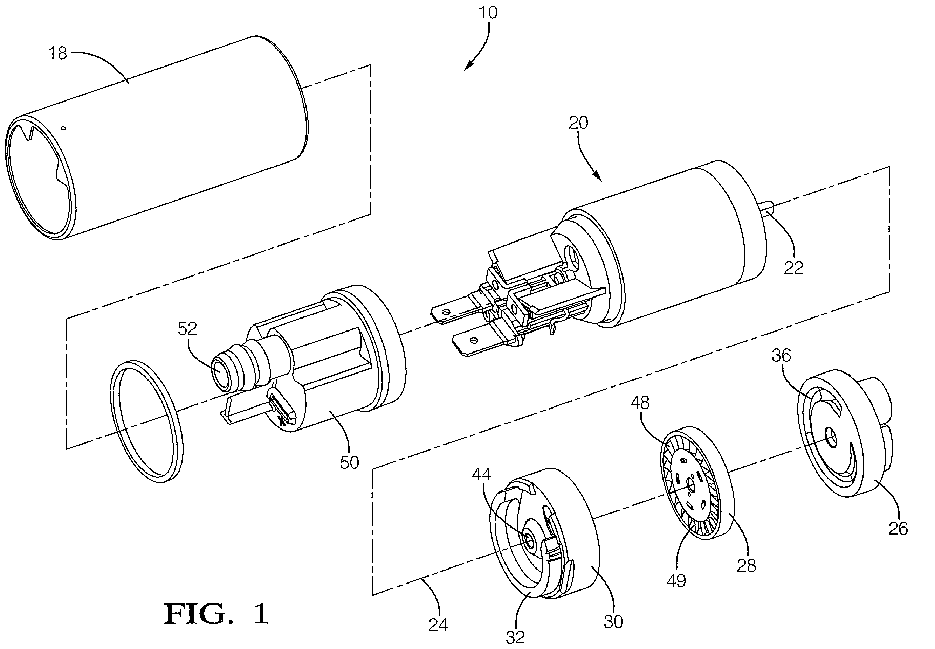

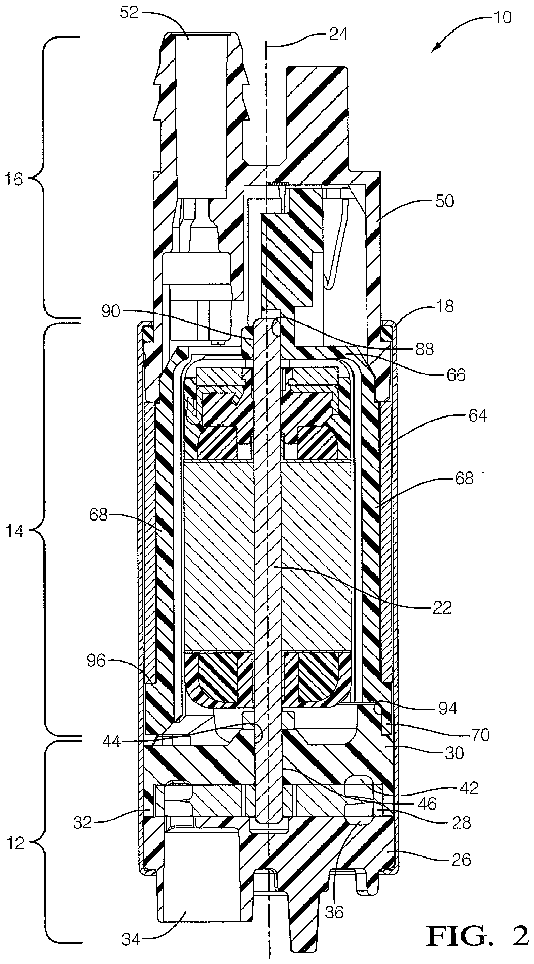

Reference will be made to Figs. 1 and 2 which are an exploded isometric view and an axial cross-sectional view respectively of a fluid pump illustrated as fuel pump 10 for pumping liquid fuel, for example gasoline or diesel fuel, from a fuel tank (not shown) to an internal combustion engine (not shown). While the fluid pump is illustrated as fuel pump 10, it should be understood that the invention is not to be limited to a fuel pump, but could also be applied to fluid pumps for pumping fluids other than fuel. Fuel pump 10 generally includes a pump section 12 at one end, a motor section 14 adjacent to pump section 12, and an outlet section 16 adjacent to motor section 14 at the end of fuel pump 10 opposite pump section 12. A housing 18 of fuel pump 10 retains pump section 12, motor section 14 and outlet section 16 together. Fuel enters fuel pump 10 at pump section 12, a portion of which is rotated by motor section 14 as will be described in more detail later, and is pumped past motor section 14 to outlet section 16 where the fuel exits fuel pump 10.

Motor section 14 includes an electric motor 20 which is disposed within housing 18. Electric motor 20 includes a shaft 22 extending therefrom into pump section 12. Shaft 22 rotates about an axis 24 when an electric current is applied to electric motor 20. Electric motor 20 will be described in greater detail later.

With continued reference to Figs. 1 and 2, pump section 12 includes an inlet plate 26, an impeller 28, and an outlet plate 30. Inlet plate 26 is disposed at the end of pump section 12 that is distal from motor section 14 while outlet plate 30 is disposed at the end of pump section 12 that is proximal to motor section 14. Both inlet plate 26 and outlet plate 30 are fixed relative to housing 18 to prevent relative movement between inlet plate 26 and outlet plate 30 with respect to housing 18. Outlet plate 30 defines a spacer ring 32 on the side of outlet plate 30 that faces toward inlet plate 26. Impeller 28 is disposed axially between inlet plate 26 and outlet plate 30 such that impeller 28 is radially surrounded by spacer ring 32. Impeller 28 is fixed to shaft 22 such that impeller 28 rotates with shaft 22 in a one-to-one relationship. Spacer ring 32 is dimensioned to be slightly thicker than the dimension of impeller 28 in the direction of axis 24, i.e. the dimension of spacer ring 32 in the direction of axis 24 is greater than the dimension of impeller 28 in the direction of axis 24. In this way, inlet plate 26, outlet plate 30, and spacer ring 32 are fixed within housing 18, for example by crimping the end of housing 18 proximal to outlet plate 30. Axial forces created by the crimping process will be carried by spacer ring 32, thereby preventing impeller 28 from being clamped tightly between inlet plate 26 and outlet plate 30 which would prevent impeller 28 from rotating freely. Spacer ring 32 is also dimensioned to have an inside diameter that is larger than the outside diameter of impeller 28 to allow impeller 28 to rotate freely within spacer ring 32 and axially between inlet plate 26 and outlet plate 30. While spacer ring 32 is illustrated as being made as a single piece with outlet plate 30, it should be understood that spacer ring 32 may alternatively be made as a separate piece that is captured axially between outlet plate 30 and inlet plate 26.

Inlet plate 26 is generally cylindrical in shape, and includes an inlet 34 that extends through inlet plate 26 in the same direction as axis 24. Inlet 34 is a passage which introduces fuel into fuel pump 10. Inlet plate 26 also includes an inlet plate flow channel 36 formed in the face of inlet plate 26 that faces toward impeller 28. Inlet plate flow channel 36 is in fluid communication with inlet 34.

Outlet plate 30 is generally cylindrical in shape and includes an outlet plate outlet passage 40 that extends through outlet plate 30 in the same direction as axis 24. Outlet plate outlet passage 40 is in fluid communication with outlet section 16 as will be describe in more detail later. Outlet plate 30 also includes an outlet plate flow channel 42 formed in the face of outlet plate 30 that faces toward impeller 28. Outlet plate flow channel 42 is in fluid communication with outlet plate outlet passage 40. Outlet plate 30 also includes an outlet plate aperture, hereinafter referred to as lower bushing 44, extending through outlet plate 30. Shaft 22 extends through lower bushing 44 in a close fitting relationship such that shaft 22 is able to rotate freely within lower bushing 44 such that radial movement of shaft 22 within lower bushing 44 is substantially prevented. In this way, lower bushing 44 radially supports a lower end 46 of shaft 22 that is proximal to pump section 12.

Impeller 28 includes a plurality of blades 48 arranged in a polar array radially surrounding and centered about axis 24 such that blades 48 are aligned with inlet plate flow channel 36 and outlet plate flow channel 42. Blades 48 are each separated from each other by a blade chamber 49 that passes through impeller 28 in the general direction of axis 24. Impeller 28 may be made, for example only, by a plastic injection molding process in which the preceding features of impeller 28 are integrally molded as a single piece of plastic.

Outlet section 16 includes an end cap 50 having an outlet 52 for discharging fuel from fuel pump 10. Outlet 52 may be connected to, for example only, a conduit (not shown) for supplying fuel to an internal combustion engine (not shown). Outlet 52 is in fluid communication with outlet plate outlet passage 40 of outlet plate 30 for receiving fuel that has been pumped by pump section 12.

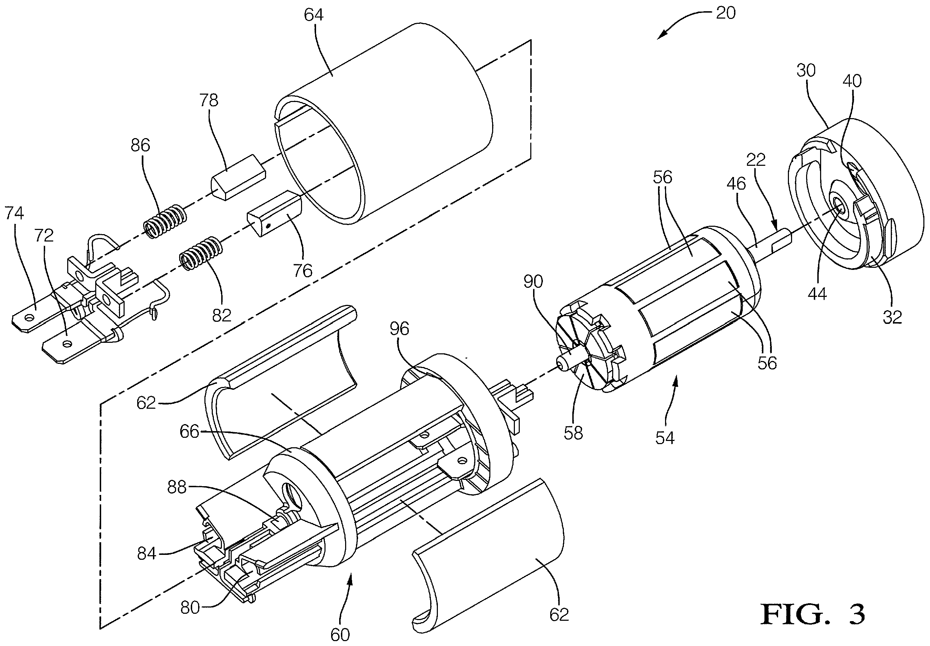

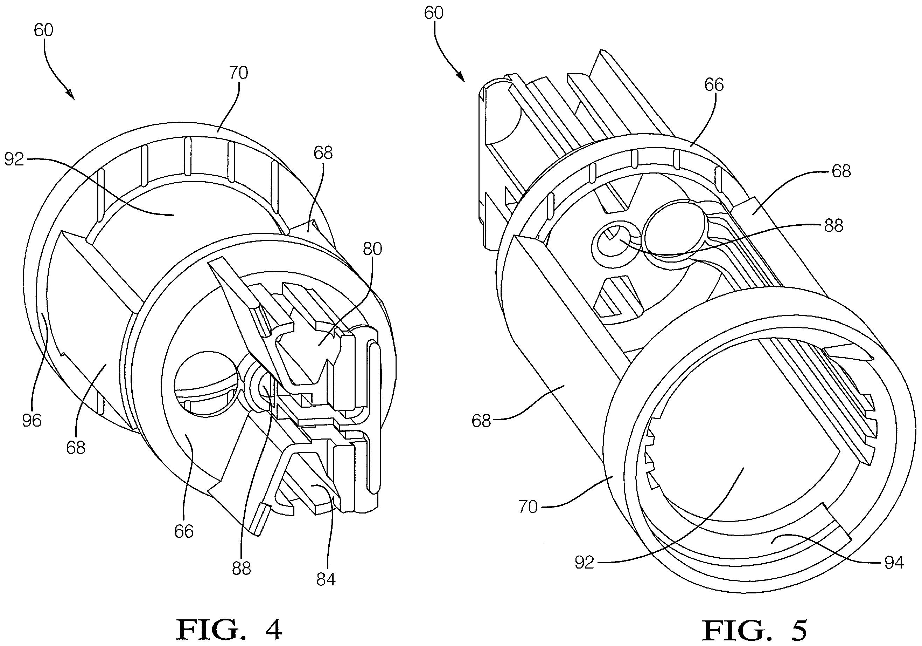

With continued reference to Figs. 1 and 2 and with additional reference to Figs. 3 and 4, electric motor 20 includes a rotor or armature 54 with a plurality of circumferentially spaced motor windings 56 and a commutator portion 58, a motor frame 60, a pair of permanent magnets 62, and a flux carrier 64. Each magnet 62 is in the shape of a segment of a hollow cylinder. Motor frame 60 includes a top section 66 that is proximal to outlet section 16, a plurality of circumferentially spaced legs 68 extending axially from top section 66 toward pump section 12, and a base section 70 axially spaced apart from top section 66 by legs 68. Top section 66, legs 68, and base section 70 are preferably integrally formed from a single piece of plastic, for example only, by a plastic injection molding process.

Top section 66 of motor frame 60 includes a first electrical terminal 72 and a second electrical terminal 74 extending therefrom and protruding through end cap 50. First electrical terminal 72 and second electrical terminal 74 are arranged to be connected to a power source (not shown) such that first electrical terminal 72 and second electrical terminal 74 are opposite in polarity. First electrical terminal 72 and second electrical terminal 74 may be disposed within pre-formed openings in top section 66 or first electrical terminal 72 and second electrical terminal 74 may be insert molded with top section 66 when motor frame 60 is formed by a plastic injection molding process. First electrical terminal 72 is in electrical communication with a first carbon brush 76 while second electrical terminal 74 is in electrical communication with a second carbon brush 78. First carbon brush 76 is disposed within a first brush holder 80 that is defined by top section 66 and is urged into contact with commutator portion 58 of armature 54 by a first brush spring 82 that is grounded to end cap 50. Second carbon brush 78 is disposed within a second brush holder 84 defined by top section 66 and is urged into contact with commutator portion 58 of armature 54 by a second brush spring 86 that is grounded to end cap 50. First carbon brush 76 and second carbon brush 78 deliver electrical power to motor windings 56 via commutator portion 58, thereby rotating armature 54 and shaft 22 about axis 24.

Top section 66 of motor frame 60 defines an upper bushing 88 therein which radially supports an upper end 90 of shaft 22 that is proximal to outlet section 16. Shaft 22 is able to rotate freely within upper bushing 88 such that radial movement of shaft 22 within upper bushing 88 is substantially prevented.

Legs 68 are preferably equally circumferentially spaced around top section 66 and base section 70 and define motor frame openings 92 between legs 68. Motor frame openings 92 extend axially from top section 66 to base section 70. One magnet 62 is disposed within each motor frame opening 92. Magnets 62 may be inserted within respective motor frame openings 92 after motor frame 60 has been formed. Alternatively, magnets 62 may be insert molted with motor frame 60 when motor frame 60 is formed by a plastic injection molding process. In this way, magnets 62 and legs 68 radially surround armature 54. While two legs 68 and two magnets 62 have been illustrated, it should be understood that other quantities of legs 68 and magnets 62 may be used.

Base section 70 may be annular in shape and connects legs 68 to each other. Base section 70 includes a base section recess 94 extending axially thereinto from the end of base section 70 that faces away from top section 66. Base section recess 94 is coaxial with upper bushing 88 and receives outlet plate 30 closely therein such that radial movement of outlet plate 30 within base section recess 94 is substantially prevented. Since base section recess 94 is coaxial with upper bushing 88, a coaxial relationship is maintained between lower bushing 44 and upper bushing 88 by base section 70. Base section 70 also defines an annular shoulder 96 that faces toward top section 66. Annular shoulder 96 may be substantially perpendicular to axis 24.

Flux carrier 64 is made of a ferromagnetic material and may take the form of a cylindrical tube. Flux carrier 64 closely radially surrounds legs 68 of motor frame 60 and magnets 62. Flux carrier 64 may be made, for example only, from a sheet of ferromagnetic material formed to shape by a rolling process. The end of flux carrier 64 that is proximal to base section 70 of motor frame 60 axially abuts annular shoulder 96 of base section 70 while the end of flux carrier 64 that is proximal to top section 66 of motor frame 60 axially abuts a portion of end cap 50 that radially surrounds top section 66 of motor frame 60. In this way, flux carrier 64 is captured axially between end cap 50 and annular shoulder 96 of base section 70.

Since motor frame 60 may be made as a single piece, for example only, by a plastic injection molding process, upper bushing 88 and base section recess 94 can be made by a single piece of tooling, thereby allowing a high degree of control over the relative positions of upper bushing 88 and base section recess 94. Consequently, lower bushing 44 can more easily be maintained in a coaxial relationship with upper bushing 88. Similarly, since first brush holder 80 and second brush holder 84 may be defined by top section 66, for example only, by an injection molding process, first brush holder 80, second brush holder 84, and upper bushing 88 may be formed by a single piece of tooling, thereby allowing a high degree of control over the relative positions of first brush holder 80, second brush holder 84, and upper bushing 88. Consequently, first brush holder 80 and second brush holder 84 can be easily maintained parallel to axis 24 which may be important for first carbon brush 76 and second carbon brush 78 to adequately interface with commutator portion 58 of armature 54.

In operation, inlet 34 is exposed to a volume of fuel (not shown) which is to be pumped to, for example only, an internal combustion engine (not shown). An electric current is supplied to motor windings 56 in order to rotate shaft 22 and impeller 28. As impeller 28 rotates, fuel is drawn through inlet 34 into inlet plate flow channel 36. Blade chambers 49 allow fuel from inlet plate flow channel 36 to flow to outlet plate flow channel 42. Impeller 28 subsequently discharges the fuel through outlet plate outlet passage 40 and consequently through outlet 52.

While this invention has been described in terms of preferred embodiments thereof, the scope is defined by the appended claims.

## Claims

1. A fluid pump (10) comprising:
a housing (18) of the fluid pump (10) retaining all together the pump section (12), the motor section (14) and the outlet section (16)) of the fluid pump (10);
an inlet (34) for introducing fluid into said fluid pump (10);
an outlet (52) for discharging fluid from said fluid pump (10);
a motor (20) having a shaft (22) that rotates about an axis (24), said shaft (22) having an upper end (90) and a lower end (46);
a motor frame (60) having a top section (66), a base section (70), and a plurality of legs (68) axially separating said top section (66) and said base section (70); and
wherein said base section (70) connects each plurality of legs (68);
wherein said base section (70) includes a recess (94) extending axially thereinto;
an outlet plate (30) disposed coaxially within said recess (94);
wherein said outlet plate (30) defines a lower bushing (44) extending through the outlet plate (30), said lower bushing (44) radially supports said lower end (46) of said shaft (22);
wherein said top section (66) defines an upper bushing (88) therein for radially supporting said upper end (90) of said shaft (22); and
wherein said base section (70) maintains a coaxial relationship between said lower bushing (44) and said upper bushing (88).

2. Fluid pump (10) as in claim 1 further comprising:
an impeller (28) having an array of blades (48) radially surrounding said axis (24), said impeller (28) being rotatable by said shaft (22) of said motor (20) wherein rotation of said impeller (28) pumps fluid from said inlet (34) to said outlet (52);
an inlet plate (26) adjacent to said impeller (28) and including said inlet (34), said inlet plate (26) includes an inlet plate flow channel (36) aligned with said array of blades (48); and
the outlet plate (30) adjacent to said impeller (28) on the side of said impeller (28) that is opposite said inlet plate (26), said outlet plate (30) having an outlet passage (40) in fluid communication with said outlet (52) and an outlet plate flow channel (42) aligned with said array of blades (48);
wherein said outlet plate (30) defines said lower bushing (44).

3. Fluid pump (10) according to anyone of the preceding claims wherein said plurality of legs (68) defines motor frame openings (92) spaced circumferentially therebetween.

4. Fluid pump (10) as in claim 3 further comprising a plurality of magnets (62) wherein each one of said plurality of magnets (62) is disposed within a respective one of said motor frame openings (92).

5. Fluid pump (10) according to anyone of the preceding claims wherein said base section (70) is annular in shape.

6. Fluid pump (10) according to anyone of the preceding claims wherein said base section (70) defines a shoulder (96) facing toward said top section (66).

7. Fluid pump (10) as in claim 6 further comprising a flux carrier (64) radially surrounding said plurality of legs (68) and axially abutting said shoulder (96).

8. Fluid pump (10) according to anyone of claims 6 to 7 wherein said shoulder (96) is annular in shape.

9. Fluid pump (10) according to anyone of the preceding claims further comprising an end cap (50) positioned over said top section (66), said end cap (50) defining said outlet (52).

10. Fluid pump (10) according to claim 7 in combination with claim 9 wherein said flux carrier (64) is captured axially between said end cap (50) and said shoulder (96) of said base section (70).

11. Fluid pump (10) according to anyone of the preceding claims further comprising:
an armature (54) having a plurality of circumferentially spaced windings (56) wherein said armature (54) is fixed to said shaft (22); and
a pair of brushes (76,78) to deliver electrical power to said windings (56);
wherein said pair of brushes (76,78) are supported in respective brush holders (80, 84) defined by said top section (66) of said motor frame (60).

## Patentansprüche

1. Fluidpumpe (10), die aufweist:
ein Gehäuse (18) der Fluidpumpe (10), das den Pumpenabschnitt (12), den Motorabschnitt (14) und den Auslassabschnitt (16) der Fluidpumpe (10) zusammenhält;
einen Einlass (34) zum Einleiten von Fluid in die Fluidpumpe (10);
einen Auslass (52) zum Abgeben von Fluid aus der Fluidpumpe (10);
einen Motor (20) mit einer Welle (22), die um eine Achse (24) rotiert, wobei die Welle (22) ein oberes Ende (90) und ein unteres Ende (46) hat;
einen Motorrahmen (60) mit einem oberen Abschnitt (66), einem Basisabschnitt (70) und einer Vielzahl von Schenkeln (68), die den oberen Abschnitt (66) und den Basisabschnitt (70) axial trennen; und
wobei der Basisabschnitt (70) jede Vielzahl von Schenkeln (68) verbindet;
wobei der Basisabschnitt (70) eine Aussparung (94) umfasst, die sich axial in diesen hinein erstreckt;
eine Auslassplatte (30), die koaxial in der Aussparung (94) angeordnet ist;
wobei die Auslassplatte (30) eine untere Buchse (44) definiert, die sich durch die Auslassplatte (30) erstreckt, wobei die untere Buchse (44) das untere Ende (46) der Welle (22) radial unterstützt;
wobei der obere Abschnitt (66) eine obere Buchse (88) darin definiert, um das obere Ende (90) der Welle (22) radial zu unterstützen; und
wobei der Basisabschnitt (70) eine koaxiale Beziehung zwischen der unteren Buchse (44) und der oberen Buchse (88) beibehält.

2. Fluidpumpe (10) gemäß Anspruch 1, die weiter aufweist:
ein Flügelrad (28) mit einer Anordnung von Flügeln (48), die die Achse (24) radial umgeben, wobei das Flügelrad (28) durch die Welle (22) des Motors (20) rotierbar ist, wobei eine Rotation des Flügelrads (28) Fluid von dem Einlass (34) zu dem Auslass (52) pumpt;
eine Einlassplatte (26) angrenzend an das Flügelrad (28) und den Einlass (34) umfassend, wobei die Einlassplatte (26) einen Einlassplatte-Flusskanal (36) umfasst, der mit der Anordnung von Flügeln (48) ausgerichtet ist; und die Auslassplatte (30) angrenzend an das Flügelrad (28) auf der Seite des Flügelrads (28), die der Einlassplatte (26) gegenüberliegt, wobei die Auslassplatte (30) einen Auslasskanal (40) in Fluidverbindung mit dem Auslass (52) hat und einen Auslassplatte-Flusskanal (42), der mit der Anordnung von Flügeln (48) ausgerichtet ist;
wobei die Auslassplatte (30) die untere Buchse (44) definiert.

3. Fluidpumpe (10) gemäß einem der vorhergehenden Ansprüche, wobei die Vielzahl von Schenkeln (68) Motorrahmenöffnungen (92) definiert, die in Umfangsrichtung dazwischen angeordnet sind.

4. Fluidpumpe (10) gemäß Anspruch 3, die weiter eine Vielzahl von Magneten (62) aufweist, wobei jeder der Vielzahl von Magneten (62) in einer jeweiligen der Motorrahmenöffnungen (92) angeordnet ist.

5. Fluidpumpe (10) gemäß einem der vorhergehenden Ansprüche, wobei der Basisabschnitt (70) ringförmig ist.

6. Fluidpumpe (10) gemäß einem der vorhergehenden Ansprüche, wobei der Basisabschnitt (70) eine dem oberen Abschnitt (66) zugewandte Schulter (96) definiert.

7. Fluidpumpe (10) gemäß Anspruch 6, die weiter einen Flussträger (64) aufweist, der die Vielzahl von Schenkeln (68) radial umgibt und axial an der Schulter (96) anliegt.

8. Fluidpumpe (10) gemäß einem der Ansprüche 6 bis 7, wobei die Schulter (96) ringförmig ist.

9. Fluidpumpe (10) gemäß einem der vorhergehenden Ansprüche, die weiter eine Endkappe (50) aufweist, die über dem oberen Abschnitt (66) positioniert ist, wobei die Endkappe (50) den Auslass (52) definiert.

10. Fluidpumpe (10) gemäß Anspruch 7 in Kombination mit Anspruch 9, wobei der Flussträger (64) axial zwischen der Endkappe (50) und der Schulter (96) des Basisabschnitts (70) aufgenommen ist.

11. Fluidpumpe (10) gemäß einem der vorhergehenden Ansprüche, die weiter aufweist:
einen Anker (54) mit einer Vielzahl von in Umfangsrichtung beabstandeten Wicklungen (56), wobei der Anker (54) an der Welle (22) befestigt ist; und
ein Paar von Bürsten (76, 78) zum Liefern von elektrischer Energie an die Wicklungen (56);
wobei das Paar von Bürsten (76, 78) in jeweiligen Bürstenhaltern (80, 84) getragen wird, die durch den oberen Abschnitt (66) des Motorrahmens (60) definiert sind.

## Revendications

1. Pompe à fluide (10) comprenant
un boîtier (18) de la pompe à fluide (10) qui retient toutes ensemble la section formant pompe (12), la section formant moteur (14) et la section de sortie (16) de la pompe à fluide (10) ;
une entrée (34) pour introduire un fluide dans ladite pompe à fluide (10) ;
une sortie (52) pour évacuer du fluide hors de ladite pompe à fluide (10) ;
un moteur (20) ayant un arbre (22) qui tourne autour d'un axe (24), ledit arbre (22) ayant une extrémité supérieure (90) et une extrémité inférieure (46) ;
un châssis de moteur (60) ayant une section supérieure (66), une section de base (70), et une pluralité de pieds (68) qui séparent axialement ladite section supérieure (66) et ladite section de base (70) ; et
dans laquelle ladite section de base (70) connecte chacun de ladite pluralité de pieds (68) ;
dans laquelle ladite section de base (70) inclut un évidement (94) qui s'étend axialement dans celle-ci ;
une plaque de sortie (30) disposée coaxialement avec ledit évidement (94) ;
dans laquelle ladite plaque de sortie (30) définit une douille inférieure (44) qui s'étend à travers la plaque de sortie (30), ladite douille inférieure (44) supportant radialement ladite extrémité inférieure (46) dudit arbre (22) ;
dans laquelle ladite section supérieure (66) définit une douille supérieure (88) à l'intérieur pour supporter radialement ladite extrémité supérieure (90) dudit arbre (22) ; et
dans laquelle ladite section de base (70) maintient une relation coaxiale entre ladite douille inférieure (44) et ladite douille supérieure (88).

2. Pompe à fluide (10) selon la revendication 1, comprenant en outre :
un rotor (28) ayant une rangée de pales (48) entourant radialement ledit axe (24), ledit rotor (28) étant mis en rotation par ledit arbre (22) dudit moteur (20), de sorte qu'une rotation dudit rotor (28) pompe du fluide depuis ladite entrée (34) vers ladite sortie (52) ;
une plaque d'entrée (26) adjacente audit rotor (28) et incluant ladite entrée (34), ladite plaque d'entrée (26) incluant un canal d'écoulement de plaque d'entrée (36) alignée avec ladite rangée d'aubes (48) ; et
la plaque de sortie (30) est adjacente audit rotor (28) sur le côté dudit rotor (28) qui est à l'opposé de la plaque d'entrée (26), ladite plaque de sortie (30) ayant un passage de sortie (40) en communication fluidique avec ladite sortie (52) et un canal d'écoulement de plaque de sortie (42) aligné avec ladite rangée d'aubes (48) ;
dans lequel ladite plaque de sortie (30) définit ladite douille intérieure (44).

3. Pompe à fluide (10) selon l'une quelconque des revendications précédentes, dans laquelle ladite pluralité de pieds (68) définissent des ouvertures (92) du châssis moteur, espacées circonférentiellement entre ceux-ci.

4. Pompe à fluide (10) selon la revendication 3, comprenant en outre une pluralité d'aimants (62), dans laquelle chacun de ladite pluralité d'aimants (62) est disposé à l'intérieur d'une ouverture respective desdites ouvertures (92) du châssis moteur.

5. Pompe à fluide (10) selon l'une quelconque des revendications précédentes, dans laquelle ladite section de base (70) a une forme annulaire.

6. Pompe à fluide (10) selon l'une quelconque des revendications précédentes, dans laquelle ladite section de base (70) définit un épaulement (96) tourné vers ladite section supérieure (66).

7. Pompe à fluide (10) selon la revendication 6, comprenant en outre un porteur de flux (64) qui entoure radialement ladite pluralité de pieds (68) et venant axialement en butée contre ledit épaulement (96).

8. Pompe à fluide (10) selon l'une quelconque des revendications 6 à 7, dans laquelle ledit épaulement (96) a une forme annulaire.

9. Pompe à fluide (10) selon l'une quelconque des revendications précédentes, comprenant en outre un capuchon terminal (50) positionné par-dessus ladite section supérieure (66), ledit capuchon terminal (50) définissant ladite sortie (52).

10. Pompe à fluide (10) selon la revendication 7, en combinaison avec la revendication 9, dans laquelle ledit porteur de flux (64) est capturé axialement entre ledit capuchon terminal (50) et ledit épaulement (96) de ladite section de base (70).

11. Pompe à fluide (10) selon l'une quelconque des revendications précédentes, comprenant en outre :
une armature (54) ayant une pluralité d'enroulements (56) circonférentiellement espacés, dans laquelle ladite armature (54) est fixée sur ledit arbre (22) ; et
une paire de balais (76, 78) pour fournir une puissance électrique auxdits enroulements (56) ;
dans laquelle ladite paire de balais (76, 78) sont supportés dans des porte-balais respectifs (80, 84) définis par ladite section supérieure (66) dudit châssis moteur (60).
